Europäisches Patentamt

European Patent Office

Office européen des brevets

(11) Publication number: **0 076 615**
**A2**

(12) **EUROPEAN PATENT APPLICATION**

(21) Application number: **82305074.5**

(22) Date of filing: **24.09.82**

(51) Int. Cl.³: **B 60 N 1/06**

(30) Priority: **07.10.81 GB 8130357**

(43) Date of publication of application:
**13.04.83 Bulletin 83/15**

(84) Designated Contracting States:
**AT BE CH DE FR IT LI LU NL SE**

(71) Applicant: **L.C.P. STEEL PRODUCTS LIMITED**
**Mill Street Darlaston**
**Wednesbury West Midlands(GB)**

(72) Inventor: **Holloway, Ian Pemberton**
**5 Cherrybrook Drive**
**Penkridge Staffordshire(GB)**

(72) Inventor: **Bright, Keith John**
**39 Sandringham Avenue**
**New Invention Willenhall West Midlands(GB)**

(74) Representative: **Collingwood, Anthony Robert et al,**
**GEORGE FUERY & COMPANY Whitehall Chambers 23**
**Colmore Row**
**Birmingham B3 2BL(GB)**

(54) **Seat reclining mechanism.**

(57) A seat reclining mechanism comprises a squab plate (10) with a ring gear (14), a cushion plate (12) with a spur gear (16) having at least one tooth less than the ring gear (14) and a hinge pivot (22) with an eccentric (20) by means of which the gears (14, 16) are held in mesh at one location, the pivot (22) being rotatable to shift the position of mesh with consequent rolling of the gears (14, 16) relative to one another and angular adjustment of the plates (10, 12). To simplify mass manufacture, an elastomeric ring (30) is incorporated into the mechanism and some degree of play is permitted between the pivot (22) and the aperture in which it is journalled which play is taken up by the ring (30). Freedom of movement perpendicularly of the direction of eccentricity, which could otherwise lead to rocking of one plate relative to the other, is restricted by appropriate shaping of opposing peripheral surfaces associated with the hinge pivot (22) and one of the hinge plates (see Figure 4).

Fig. 1

Croydon Printing Company Ltd.

1.

## DESCRIPTION

## SEAT RECLINING MECHANISM

This invention relates to a seat reclining mechanism comprising a first hinge plate provided with an internally toothed gear ring, a second hinge plate provided with an externally toothed spur gear having at least one tooth less than the ring gear, and a hinge pivot coupling said plates together with the spur gear in mesh with the ring gear, said hinge pivot including an eccentric portion which determines the position of mesh and together with the ring gear and spur gear provides a self-locking action to prevent relative adjustment between the hinge plates other than via turning of the eccentric portion. Such a mechanism is hereinafter referred to as being of the kind specified. One example is the well known Taumel-type which is the subject of British Patent No. 1,180,848, the disclosure of which is incorporated herein by reference.

The Taumel mechanism has been used by most of the major car manufacturers throughout the world for a number of years. However, as with many other forms of continuously-engaged reclining mechanisms employing gears, it is subject to the drawback that the tolerances that inevitably have to be allowed for in mass manufacture lead to a condition in which the backrest can rock slightly back and forth with the possibility of rattle especially when the seat is not occupied.

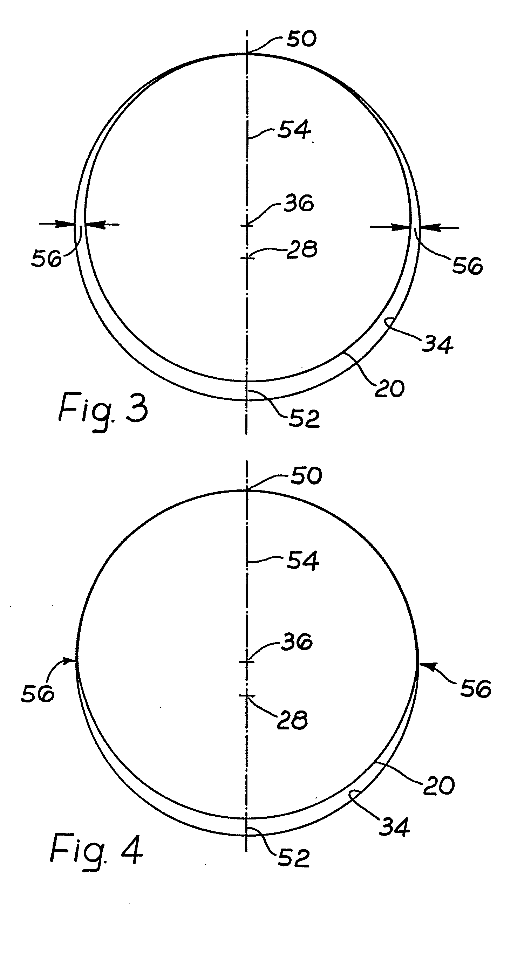

Those in the art have been aware of this drawback for many years but no satisfactory solution has been put forward. A proposal was made in British Patent No. 1,091,994 to compensate for manufacturing tolerances by incorporating a pre-compressed rubber ring located in a cage fast with one of the hinge plates and bearing against the hinge pivot (see Figure 4 especially). Whilst such a compensating ring serves to take up radial play in the region of mesh between the spur gear and ring gear, the provision of the compensating ring involves a greater degree of eccentricity in the pivot to effect loading which means that greater clearance must be allowed for, which clearance cannot be satisfactorily compensated for by the presence of the rubber ring. Thus, if a relatively hard rubber is employed to resist rocking the effort needed to effect adjustment is substantially increased. On the other hand, if a softer rubber is used to reduce the effort required, rocking remains a problem. The proposal in Patent No. 1,091,994 has not in practice proved commercially acceptable.

The object of the present invention is to provide a commercially acceptable solution to the problem outlined above.

Accordingly the present invention resides in a mechanism of the kind specified including spring means for compensating for manufacturing tolerances in the components of said mechanism, characterised in that a pair of peripheral surfaces is provided between which there is sufficient radial clearance to allow limited relative movement between one of the hinge plates and the hinge pivot parallel to the direction of eccentricity and in that one of said peripheral surfaces deviates from a circular configuration in such a way that the degree of relative movement between the hinge pivot and said one hinge plate in a direction generally perpendicular to said direction of eccentricity and to the axis of the hinge pivot is less than in the case where both peripheral surfaces are circular.

The spring means preferably comprises a ring of resiliently deformable material (which may be pre-stressed during assembly of the mechanism) acting between said pair of peripheral surfaces. There may be more than one pair of said peripheral surfaces in which case there will be a corresponding number of resiliently deformable rings associated one with each pair of peripheral surfaces.

In practice, the mechanism will be designed so that the degree of relative movement possible in said generally perpendicular direction is negligible, i.e. no more than necessary to provide a normal running clearance. The present invention is based on the realisation that this component of relative movement is a significant contribution to the problem of rocking and that the previous proposal made in Patent No. 1,091,994 is not a satisfactory solution because reliance is placed on the rubber to restrict such movement.

In one embodiment, one of said peripheral surfaces may be formed with a groove for accommodating the resilient ring which may bear against the other peripheral surface. However, the resilient ring is not necessarily located between the peripheral surfaces; in one convenient arrangement, the ring may be located between two other concentric surfaces both of which may be of truly cylindrical configuration. As well as taking up radial play between the hinge plates, the resilient ring may also afford some measure of torsional damping if it is located between a pair of relatively movable surfaces which may be advantageous in avoiding juddering

4.

of the mechanism during adjustment, especially
at the driven side, i.e. the mechanism on the
opposite side of the seat to the operating handle
in a double-sided arrangement. There may however
be advantages if the surfaces between which the
resilient ring is located are not movable relative
to one another since the effort of rotating the
hinge pivot may be reduced allowing the possibility
of preloading the resilient ring to a greater
extent.

As used herein, the term "ring" is to be
construed to include both the case where the (or
each) ring is continuous and where the ring is
discontinuous, e.g. in the form of a series of
peripherally extending strips or such like space
substantially uniformly in the peripheral direction.

In practice the radially inner one of the
pair of peripheral surfaces will be constituted
by a peripheral portion of the hinge pivot, e.g.
the eccentric portion thereof or a non-eccentric
portion thereof. Where two pairs of peripheral
surfaces are employed, the peripheral surfaces
associated with the hinge pivot may be afforded
by the non-eccentric portions thereof disposed
axially on each side of the eccentric portion.
In general, the invention can be put into practice
in a particularly simple manner if the (or each)
radially inner peripheral surface deviates from
circular configuration as aforesaid.

The radially outer peripheral surface of
the or each pair may be constituted by a surface
of said one hinge plate and/or a clamping plate
associated therewith but preferably the radially
outer peripheral surface is provided by an intermediate component disposed between the hinge pivot and said one hinge plate (and/or the clamping plate). The intermediate component is preferably rotatably fast with said one hinge plate but it is conceivable for it to be rotatably free with respect to said one hinge plate and in this event the radially outer peripheral surface may deviate from the circular configuration as aforesaid if means is provided for maintaining the intermediate component in a fixed angular relation with the hinge pivot during turning of the latter for the purpose of effecting adjustment.

In general, the deviation of said one peripheral surface from circular configuration will be such that, over at least part of the regions of said one peripheral surface which extend substantially 90° each side of the position of maximum eccentricity, the clearance between said pair (or each pair) of peripheral surfaces is less than the case if both of the peripheral surfaces were of circular configuration. The deviation from circularity may be localized, i.e. at discrete positions each side of the position of maximum eccentricity or said one peripheral surface may comprise part-circular zones with different centres of curvature and/or radii. For example, over substantially one half thereof, said one peripheral surface may be part circular with a radius substantially the same as the second peripheral surface (subject to an allowance for normal running clearance) and over the remainder thereof said one peripheral surface may be again part-circular and of the same radius but with a different centre of curvature so as to afford the clearance required for relative movement between the hinge pivot and said one hinge plate parallel to the direction of eccentricity.

6.

Examples of the present invention will now be described with reference to the accompanying drawings in which :

Figure 1 is a radial section through a Taumel type mechanism in accordance with the invention;

Figure 2 is a fragmentary enlarged view of a slightly modified version of the mechanism shown in Figure 1;

Figures 3 and 4 are schematic diagrams illustrating the clearances between the hinge pivot and the components accommodating the rubber ring, Figure 3 being concerned with an embodiment falling outside the scope of the present invention;

Figure 5 is a sectional view corresponding to Figure 2 but at right angles to that shown in Figure 2; and

Figure 6 is a similar view to Figure 1 but showing a modification.

Figure 7 is a similar view to Figure 1 of another modification;

Figure 8 is a front elevation of a pressed component used in the embodiment of Figure 7; and

Figure 9 is a similar view to Figure 1 of yet another modification.

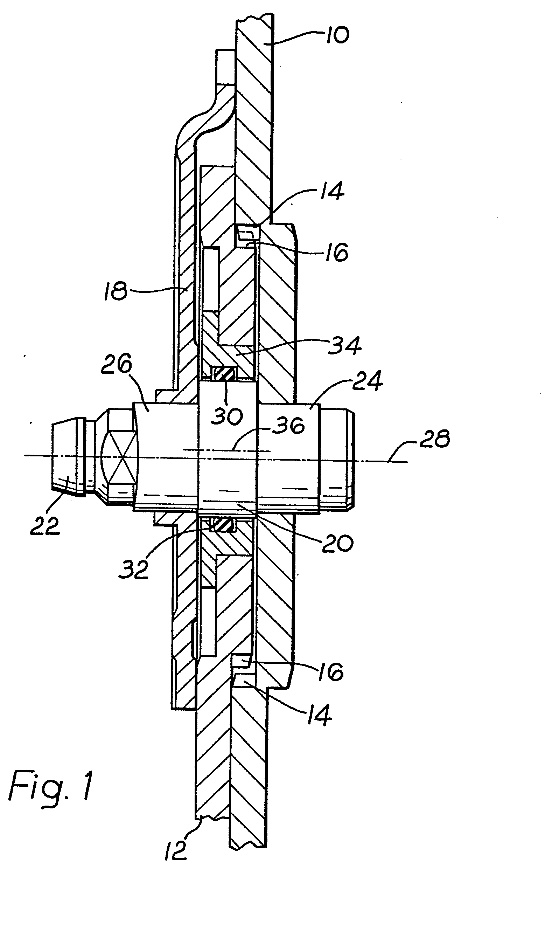

Referring now to Figure 1, there is shown a Taumel-type seat reclining mechanism which, apart from the modifications discussed hereinafter, is generally conventional and will therefore only be described briefly.  The mechanism comprises a squab plate 10 for attachment to the backrest frame of a vehicle seat and a cushion plate 12 for attachment to the cushion frame of the seat. The squab plate 10 is formed, by the fine blanking technique, with an internally toothed ring gear 14 and the cushion plate 12 is likewise formed with a spur gear 16 which is accommodated within the recess encircled by the ring gear 14 and is trapped axially by a clamping plate 18 which is secured to the squab plate 10 by unshown means. The spur gear 16 has at least one tooth less than the ring gear 14 and is held in mesh with the latter at one position by means of an eccentric 20 forming part of a hinge pivot 22 whose non-eccentric portions 24, 26 are journalled in the squab plate 10 and the clamping plate 18.

Turning of the hinge pivot 22 about its axis 28 causes the eccentric 20 to turn with consequent change in the position of mesh such that one complete revolution of the hinge pivot 22 is effective to adjust the plate 10 by an angular distance corresponding to the difference in the numbers of teeth on the gears 14 and 16. The eccentric 20 together with the gears 14 and 16 provides a self-locking action whereby relative adjustments between the plates 10 and 12 can be made through the agency of the hinge pivot 22 but not vice versa.

To compensate for manufacturing tolerances in production of the various components including the gears 14,16, the pivot 22 and the apertures in the parts, a pre-compressed O-ring 30 of elastomeric material, e.g. natural or synthetic rubber, acts between the hinge pivot 22 and the cushion plate 12. The O-ring 30 is accommodated in a peripheral groove 32 formed in an intermediate component 34

8.

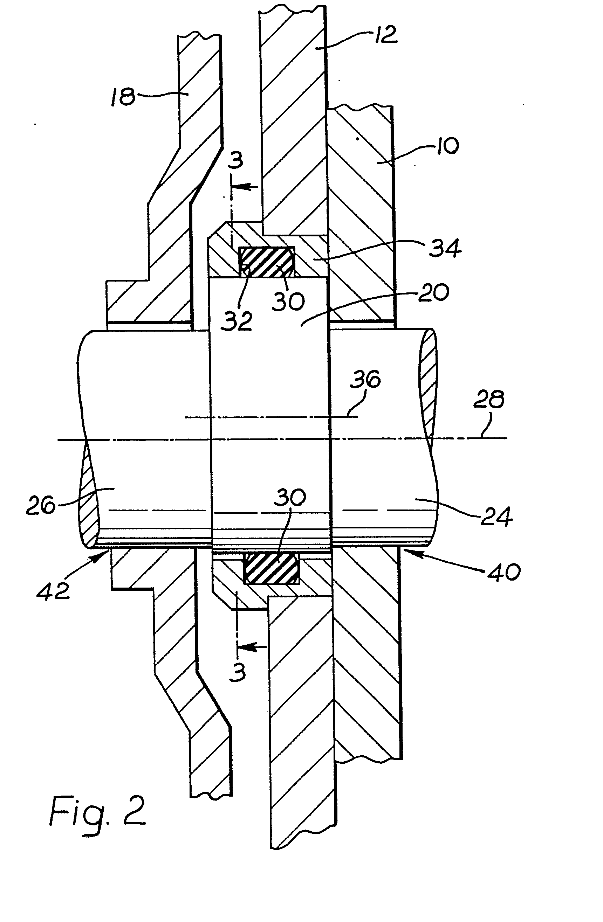

which is made rotatably fast with the plate 12, e.g. by virtue of a press fit. In Figures 1 and 2, the position of mesh between gears 14, 16 is shown at top dead centre and inaccuracies in the components are compensated for by the presence of the ring 30 which tends to bring about or permit a condition where the gears 14, 16 are fully engaged and, as shown in Figure 2, the non-eccentric portions 24, 26 of the hinge pivot are shifted slightly with respect to the bores in which they are journalled and effectively into bearing contact at zones 40, 42 on that side of the hinge pivot diametrically opposite the position of mesh between the gears 14, 16. In this manner, a smooth rolling action of the gears 14, 16 relative to each other is obtained and any regions of tight or loose meshing fit between the gears (with consequent variation in the effort required for adjustment and hence the "feel" of the operating handle) are compensated for by compression and expansion of the rubber ring 30.

In a conventional Taumel mechanism, the peripheral surface of the eccentric 20 and the opposing peripheral surface of the aperture or bore in which it is received are of circular configuration (i.e. the surfaces are cylindrical) and only a relatively small running clearance is provided between. If the corresponding surfaces of the mechanism shown in Figure 2 are cylindrical then an axial section (3-3) of the arrangement shown in Figure 2 will be of the form indicated diagrammatically in Figure 3 in which the clearance between the opposing cylindrical surfaces of eccentric and component 34 increases progressively from a minimum at point 50 to a maximum at point 52 disposed on the line of eccentricity 54 which joins the axes 28 and 36. In particular, it will be observed that there are substantial clearances at those points 56 which are spaced substantially 90° from the point 50.

Thus, whilst there is substantial clearance
in the direction 54 of eccentricity as is necessary
to enable the ring 30 to perform its compensating
function, there is also substantial clearance
perpendicularly to this direction and it has been
found that this latter clearance is largely responsible
for the previously discussed problem of rocking
because the surface 34 is in effect free to rock
about the fulcrum, constituted by the instantaneous
point of engagement between the two sets of teeth
which point, in Figure 3, will lie along the axis
54, within the limits imposed by the clearances
at points 56. Although the presence of the rubber
ring 30 will tend to counteract such movement, its
effectiveness in this respect depends upon its hardness
which, in turn, governs the effort needed on the
part of the user to effect adjustment and is therefore
counter-productive.

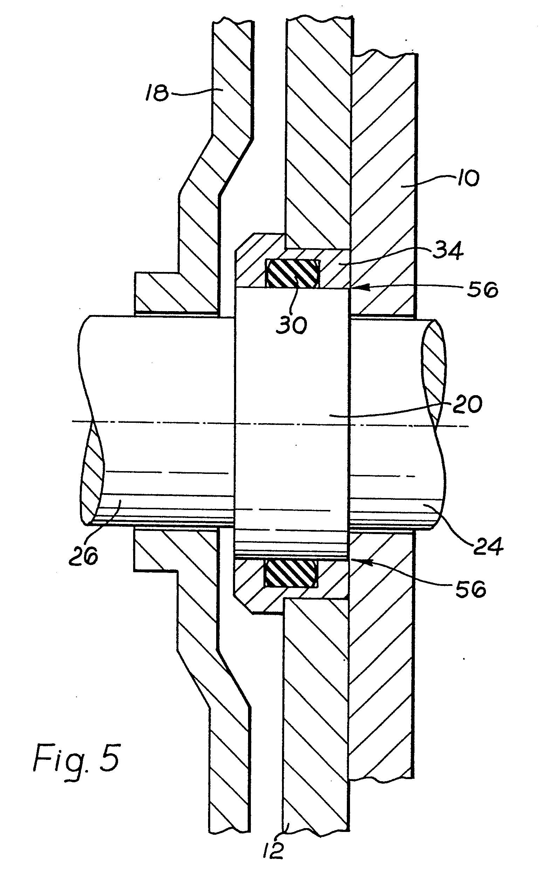

Referring next to Figure 4, the problem is
solved in accordance with the invention by designing
the eccentric 20 with a peripheral surface which
deviates from cylindrical form so as to minimise
the rocking tendency referred to above without relying
upon the rubber ring. This is achieved in Figure
4 by shaping the eccentric 20 so that the clearance
is reduced in said generally perpendicular direction
especially in the vicinity of the points 56 without
significantly affecting the clearance in the direction
of eccentricity. Thus, for example, the peripheral
surface of the eccentric 20 may comprise an upper
cylindrical half and a lower cylindrical half having
different centres of curvature such that the clearance
between the eccentric 20 and the component 34 is
minimal around the top half but increases around
the lower half to enable relative shifting of the
eccentric 20 and the component 34 along the direction
of eccentricity, i.e. line 54. Figure 5 illustrates
a horizontal section through the mechanism at right angles to the section shown in Figure 2 illustrating the minimal clearances at points 56.

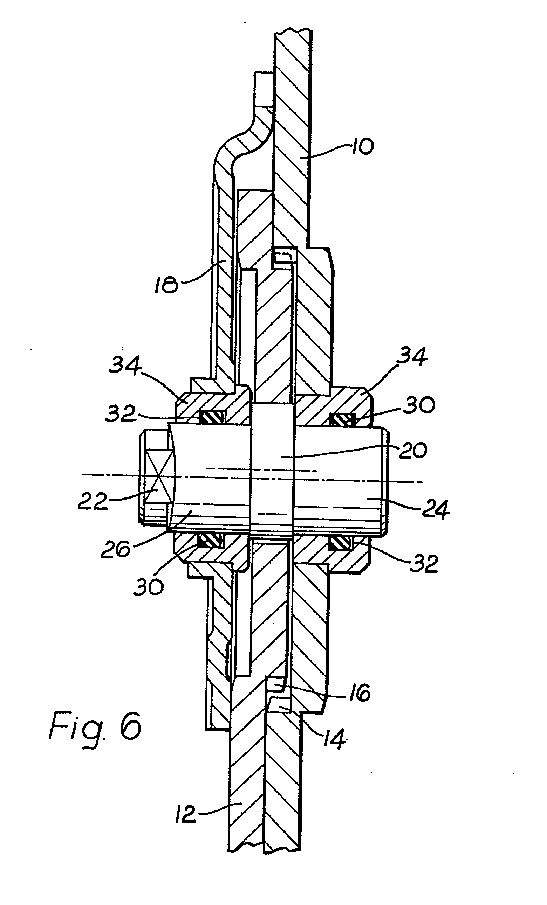

Figure 6 illustrates a modification of the embodiment of Figure 1 in which the same reference numerals are used to depict like parts. In this modification, the spring action is exerted between the hinge pivot and the squab plate and takes the form of two O-rings 30 bearing one on each of the non-eccentric portions 24, 26 and engaged in grooves 32 in respective annular components 34 which are rotatably fast with the squab plate 10 and clamping plate 18. In this case, the non-eccentric portions 24, 26 of the hinge pivot will deviate from a circular configuration so as to cooperate with the components 34 in a manner generally similar to that described with reference to Figure 4.

The manufacture of the hinge pivot with a peripheral surface or surfaces deviating from truly cylindrical form may be achieved, for example, by producing it from a drawn bar with a desired contour and machining the bar with the cylindrical portion or portions. Thus, in the embodiment of Figure 1 where the eccentric 20 deviates from truly cylindrical contour, the bar from which the hinge pivot is manufactured may be drawn or otherwise formed with this contour and then machined with the truly cylindrical surfaces corresponding to the non-eccentric portions 24, 26. Alternatively, the hinge pivot may be manufactured in parts, e.g. a main shaft of cylindrical contour onto which is force fitted a preformed sleeve or sleeves having the desired non-cylindrical peripheral surface or surfaces. Each such sleeve may for instance be manufactured as a sintered component. Thus, in this case, the truly cylindrical surface or surfaces of the hinge pivot are provided by the shaft and the non-cylindrical surface or surfaces are provided by said sleeve or sleeves.

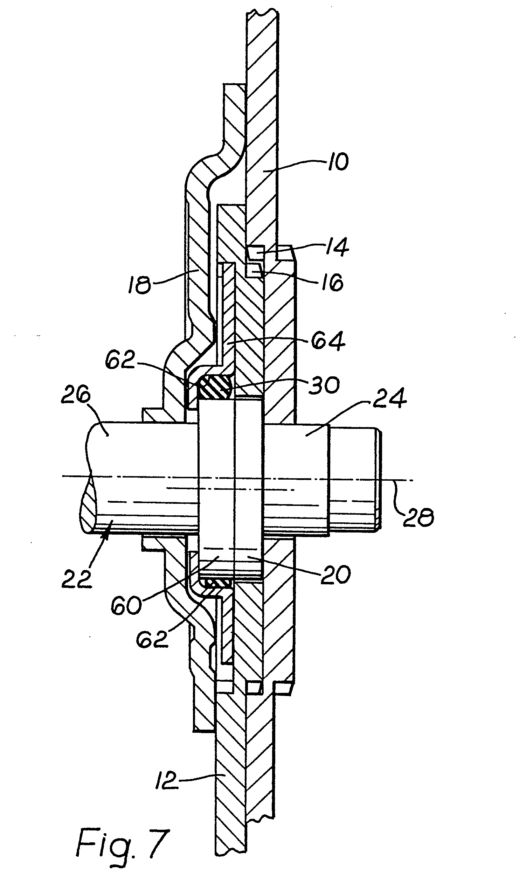

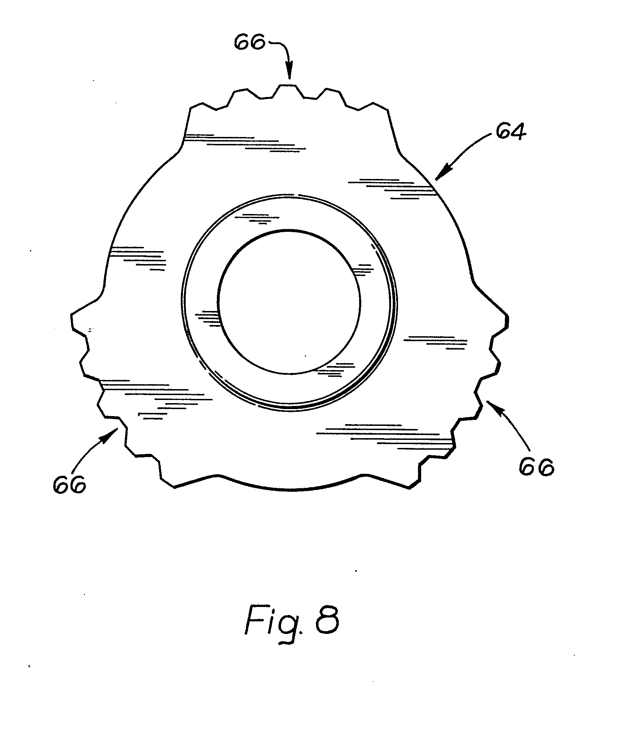

In the embodiments thus far described, the rubber ring 30 is located between the or each non-circular surface and the adjacent circular surface. This may lead to undesirable effects which can be overcome by means of the embodiment shown in Figure 7 which apart from the modifications described below uses the same reference numerals as used in Figure 1 to depict like components. In this embodiment, the pivot 22 includes a truly cylindrical but eccentric portion 60 and the rubber ring 30 is located between the periphery of the portion 60 and an outer truly cylindrical surface 62 of a cage 64. The cage 64 may be manufactured as a pressing and is securely connected within the recess left in part 12 as a result of the fine blanking of the teeth 16. Thus, as shown in Figure 8, the cage 64 is formed with sets of teeth 66 which are interfitted with the tooth gaps left by fine blanking operation to hold the cage rotatably fast with the part 12. The cage may be rendered axially captive to the part 12 in various ways.

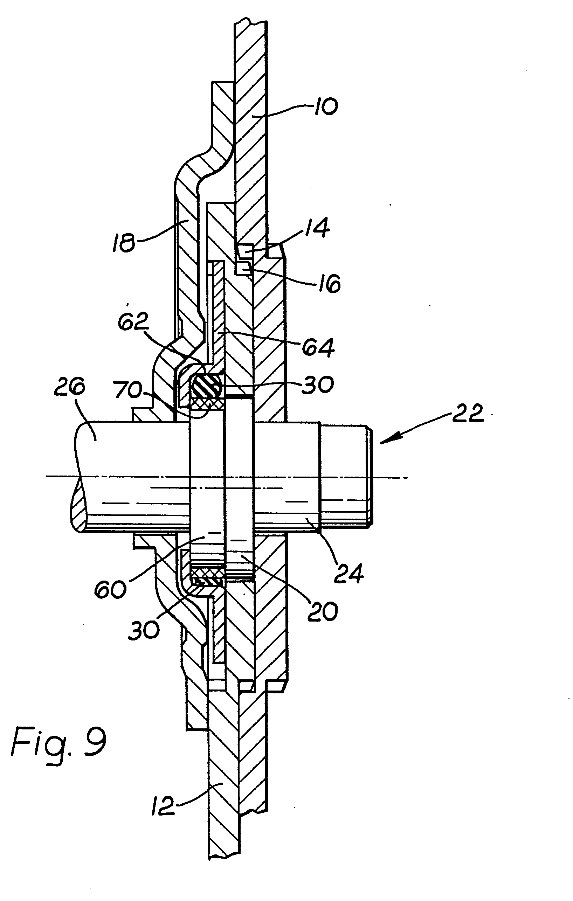

Figure 9 illustrates yet another modification in which the rubber ring 30 is located between a pair of surfaces which are not movable relative to one another. Thus, in this case the inner periphery of the ring 30 bears against a sleeve 70 which is rotatably fast with the cage 64 and freely rotatable relative to the portion 60. As in the embodiment of Figure 7, both of the surfaces which are contacted by the ring 30 are truly cylindrical (within normal manufacturing tolerances).

## CLAIMS

1. A seat reclining mechanism comprising a first hinge plate provided with an internally toothed gear ring, a second hinge plate provided with an externally toothed spur gear having at least one tooth less than the ring gear, a hinge pivot coupling said plates together with the spur gear in mesh with the ring gear, said hinge pivot including an eccentric portion which determines the position of mesh and together with the ring gear and spur gear provides a self-locking action to prevent relative adjustment between the hinge plates other than via turning of the eccentric portion, and spring means for compensating for manufacturing tolerances in the components of said mechanism, characterised in that a pair of peripheral surfaces is provided between which there is sufficient radial clearance to allow limited relative movement between one of the hinge plates and the hinge pivot parallel to the direction of eccentricity and in that one of said peripheral surfaces deviates from a circular configuration in such a way that the degree of relative movement between the hinge pivot and said one hinge plate in a direction generally perpendicular to said direction of eccentricity and to the axis of the hinge pivot is less than would be the case if both peripheral surfaces are circular.

2. A mechanism as claimed in Claim 1 characterised in that the spring means acts between the hinge pivot and one of said hinge plates.

3. A mechanism as claimed in Claim 2 characterised in that the spring means comprises at least one ring of resiliently deformable material located so as to counteract said limited relative movement between the hinge pivot and said one hinge plate
parallel to the direction of eccentricity.

4. A mechanism as claimed in Claim 3 characterised
in that the or each said ring is located between
a radially inner surface provided by the hinge pivot
and a radially outer surface provided by said one
hinge plate or a component which is rotatably fast
therewith.

5. A mechanism as claimed in Claim 3 characterised
in that the or each said ring is located between
two radially opposed surfaces which are non-rotatable
with respect to one another.

6. A mechanism as claimed in Claim 4 or 5 characterised
in that the surfaces between which said ring or
rings are located are of cylindrical configuration.

7. A mechanism as claimed in any one of Claims
1-6 characterised in that the deviation of said
one peripheral surface from circular configuration
will be such that, over at least part of the regions
of said one peripheral surface which extend substantially
90° each side of the position of maximum eccentricity,
the clearance between said pair of peripheral surfaces
is less than the case if both of the peripheral
surfaces are of circular configuration.

8. A mechanism as claimed in any one of Claims
1-7 characterised in that said one peripheral surface
is constituted by a peripheral surface of the hinge
pivot eccentric.

9. A mechanism as claimed in any one of Claims
1-7 characterised in that said one peripheral surface
is constituted by a non-eccentric portion of the
hinge pivot.

10.  A mechanism as claimed in any one of Claims
1-9 characterised in that more than one pair of
said peripheral surfaces is provided.

Fig. 1

Fig. 2

Fig. 3

Fig. 4

Fig. 5

Fig. 6

10

14

18

16

64

62

30

26

24

28

22

20

60

62

12

Fig. 7

Fig. 8

Fig. 9